# EUROPEAN PATENT APPLICATION

(11) **EP 1 437 572 A2**
(43) Date of publication of application: **14.07.2004**
(21) Application number: 04000168.7
(22) Date of filing: 07.01.2004
(51) Int. Cl.: G01C 21/26

(54) **Navigation apparatus, method and program**

(30) Priority: 08.01.2003 JP 2003002325
(71) Applicant: Pioneer Corporation, Tokyo-to (JP)
(72) Inventor: Yano, Kenichiro, Pioneer Corp., Head Office, Tokyo-to (JP); Hayashida, Tomoko, Pioneer Corp., Kawagoe Works, Kawagoe-shi Saitama-ken (JP); Moriya, Nami, Pioneer Corp., Kawagoe Works, Kawagoe-shi Saitama-ken (JP); Ooue, Hiroshi, Pioneer Corp., Kawagoe Works, Kawagoe-shi Saitama-ken (JP); Hijikata, Makato, Pioneer Corp., Kawagoe Works, Kawagoe-shi Saitama-ken (JP); Homma, Yasuhide, Pioneer Corp., Kawagoe Works, Kawagoe-shi Saitama-ken (JP); Ito, Hiroaki, Pioneer Corp., Head Office, Tokyo-to (JP)
(74) Representative: Klingseisen, Franz

(57) **Abstract**

The navigation apparatus 100 comprises: a GPS receiving unit 101, a sensor unit 102, a DVD disc drive 105 that reads data from a DVD disc 200 on which data such as map data are pre-recorded, a map-data-storage unit 106 that acquires the map data in advance from the DVD disc 200 with perform route guidance and stores it, and a system-control unit 115 that controls the entire system, and that performs route guidance for an automobile based on the map data stored in the map-data-storage unit 106.

## Description

### BACKGROUND OF THE INVENTION

### 1. Field of the Invention

This invention relates to the technical field of a navigation apparatus that performs route guidance for a moving body.

### 2. Description of the Related Art

In recent years, navigation apparatuses, which provide guidance for a moving body such as an automobile by displaying a map on a display such as a liquid-crystal display mounted in the automobile or the like, have become wide spread.

With this kind of navigation apparatus, when the user sets a destination, the navigation apparatus acquires map data from a recording medium such as a DVD disc, and searches for a route based on the acquired map data and the current position of the moving body in which this navigation apparatus is installed, and provides guidance for the moving body based on the found route (For example, refer to Patent Application 1.)

### [Patent Application 1]

Japanese Laid-Open Patent Application No. H11-339398

However, in the case of a navigation apparatus having a portable recording medium such as a DVD disc on which map data are recorded, map data are acquired when performing route guidance of the moving body by constantly accessing the portable recording medium, and route guidance is performed and the current position of the moving body is displayed based on the acquired map data, so when the portable recording medium is removed from navigation apparatus during route guidance of the moving body, it becomes impossible to acquire map data and thus it is not possible to perform route guidance of the moving body.

### SUMMARY OF THE INVENTION

Taking the aforementioned point into consideration, the object of this invention is to provide a navigation apparatus having a portable recording medium on which map data are recorded, and that is capable of performing route guidance or displaying the current position of the moving body even when the portable recording medium has been removed, and that is inexpensive as well as compact.

The above object of present invention can be achieved by a navigation apparatus of the present invention. The navigation apparatus is provided with: an acquisition device for acquiring the current position of a moving body; a registration device that is used when registering the destination to which the moving body is to reach; a reading device in which a portable recording medium on which map data is recorded is mounted and which reads at least the map data recorded on the portable recording medium; a setting device for setting a route to the destination based on the acquired current position, the registered destination and the recorded map data; a memory device for storing map data used route guidance for the moving body based on the set route; and a transfer device for transferring the map data, which has a preset geographical range that includes the road set as the route, based on the current position of the moving body and the set route from the portable recording medium to the memory device.

According to the present invention, the map data which has a preset geographical range that includes the road set as the route is transferred from the portable recording medium to the memory device based on the current position of the moving body and the set route

Accordingly, in the present invention, because it is possible to store the map data to be used in route guidance after the route is set in a memory, even when it is impossible to read the map data from the portable recording medium on which the map data is stored such as when the portable recording medium is replaced with another recording medium, neither route guidance or the display of the current position of the automobile is stopped, and it is possible to accurately perform route guidance and display the current position.

Furthermore, in the present invention, it is possible to accurately perform route guidance and display the current position by simply transferring the map data to be used in route guidance to a memory even when it is impossible to read the map data as described above. Therefore, it is possible to accurately perform route guidance and display the current position using an inexpensive and compact navigation apparatus.

In one aspect of the present invention, the navigation apparatus is further provided with; the transfer device, when transferring the map data, sets a geographical range for the map data based on preset transfer conditions, and then transfers the map data from the portable recording medium to the recording medium based on the set geographical range.

According to the present invention, when transferring the map data, a geographical range for the map data is set based on preset transfer conditions, and the map data is transferred from the portable recording medium to the recording medium based on the set geographical range.

Accordingly, if the map data having a road which may be set as route by searching again and reset the route is transferred in advance based on the transfer conditions, it is possible to accurately perform route guidance and display the current position based on pre-stored map data without transferring the map data used the route guidance again even when the route is searched again and reset due to ever-changing road conditions such as traffic jams or traffic accidents, or the user's sudden changes or modifications in stopping points along the route.

As a result, in the invention, it is possible to accurately perform the route guidance and displaying the current located when resetting the route even when it is not possible to read the portable recording medium on which the map data is pre-recorded, and thus it is possible to do away with troublesome user operation such as remounting the portable recording medium on which the map data are stored when the map data on the portable recording medium cannot be read.

In one aspect of the present invention, the navigation apparatus is further provided with; the transfer device sets the geographical range of the map data with at least one of the amount of the map data and the route characteristics indicating the characteristics of the set route as the transfer condition.

According to the present invention, the geographical range of the map data is set based on the transfer conditions which includes the amount of the transferred map data or route characteristics, which indicate the characteristics of the set route.

For example, in the case where the map data has the road, which is a freeway, set as the route and the entrances and exits of that freeway, in the case where the map data contains the destination or stops along the way, in the case where the map data having road set as route is in a city, or in the case where the map data contains the position of the automobile at the time when the route is set, there is a high probability that the route will be searched again and changed, and the frequency that the route is changed to a road surrounding the set route is high.

On the other hand, in the case where the map data has the road, which is a freeway, set as the route and do not has the entrances and exits of that freeway, or in the case where the map data having the normal road set as the route is outside of a city, it is very rare that the actual route is changed even when the route is searched again changed, and frequency that the route is changed to a road surrounding the set route is low.

Therefore, in the present invention, if the geographical range of the map data is set to wide range in the case where it is judged the high probability that there will be route changes to the set route, and the geographical range of the map data is set to narrow range in the case where it is judged the low probability that there will be route changes to the set route, based on route characteristics such as the type or area of the route, it is possible to accurately perform route guidance and display the current position based on pre-stored map data without transferring the map data used the route guidance again even when the route is searched again and reset due to ever-changing road conditions such as traffic jams or traffic accidents, or the user's sudden changes or modifications in stopping points along the route.

As a result, in the invention, it is possible to accurately perform the route guidance and displaying the current located when resetting the route even when it is not possible to read the portable recording medium on which the map data is pre-recorded, and thus it is possible to do away with troublesome user operation such as remounting the portable recording medium on which the map data are stored when the map data on the portable recording medium cannot be read.

Furthermore, when it is not possible to store the map data in memory even though the geographical range of the map data to be transferred based on the set road characteristics, it is not possible to perform route guidance.

Therefore, in the present invention, it is possible to transferred the map data having the roads that may be set as the route by searching again and resetting within a geographical range, taking into consideration the amount of the map data to be transferred

In one aspect of the present invention, the navigation apparatus is further provided with; the transfer device sets the geographical range of the map data with the road characteristics, which includes at least one of the type of the set route, points along the way including preset conditions for the set route, and characteristics of district indicated by map data, as the transfer condition.

According to present invention, the geographical range of the map data is set based on the road characteristics, points along the way and characteristics of district.

Accordingly, in present invention, if the geographical range of the map data is set to wide range in the case where it is judged the high probability that there will be route changes to the set route, and the geographical range of the map data is set to narrow range in the case where it is judged the low probability that there will be route changes to the set route, based on the transfer condition such as the road characteristics, points along the way and characteristics of district, it is possible to accurately perform route guidance and display the current position based on pre-stored map data without transferring the map data used the route guidance again even when the route is searched again and reset due to ever-changing road conditions such as traffic jams or traffic accidents, or the user's sudden changes or modifications in stopping points along the route.

As a result, in the invention, it is possible to accurately perform the route guidance and displaying the current located when resetting the route even when it is not possible to read the portable recording medium on which the map data is pre-recorded, and thus it is possible to do away with troublesome user operation such as remounting the portable recording medium on which the map data are stored when the map data on the portable recording medium cannot be read.

In one aspect of the present invention, the navigation apparatus is further provided with; in the case where the entire map is divided into a plurality of blocks, and the divided block map data is recorded on the portable recording medium, and the transfer device transfers the plurality of blocks of block map data recorded on the portable recording medium to the memory device in block units based on the geographical range of the map data.

According to the present, the map data of a plurality of blocks that are recorded on the portable recording medium to memory are transferred every block based on the geographical range of the map data.

Accordingly, in the present invention, because it is possible to transfer the map data that is divided up in blocks and to perform the route guidance based on that transferred map data, it is possible to easily set the geographical range to be transferred, and to easily transfer that map data.

The above object of present invention can be achieved by a navigation map data acquisition method of the present invention. The navigation map data acquisition method is provided with: an acquisition step of acquiring the current position of a moving body; a registration step of registering the destination to which the moving body is to reach; a reading step of reading the map data recorded on a mounted portable recording medium; a recording step of transferring the map data, which has a preset geographical range that includes the road set as the route, based on the current position of the moving body and the set route from the portable recording medium to a memory device, and recording the transferred map data on the memory device as the map data for using route guidance for the moving body based on the set route.

According to the present invention, the map data which has a preset geographical range that includes the road set as the route is transferred from the portable recording medium to the memory device based on the current position of the moving body and the set route

Accordingly, in the present invention, because it is possible to store the map data to be used in route guidance after the route is set in a memory, even when it is impossible to read the map data from the portable recording medium on which the map data is stored such as when the portable recording medium is replaced with another recording medium, neither route guidance or the display of the current position of the automobile is stopped, and it is possible to accurately perform route guidance and display the current position.

Furthermore, in the present invention, it is possible to accurately perform route guidance and display the current position by simply transferring the map data to be used in route guidance to a memory even when it is impossible to read the map data as described above. Therefore, it is possible to accurately perform route guidance and display the current position using an inexpensive and compact navigation apparatus.

In one aspect of the present invention, the navigation map data acquisition method is further provided with; the recording step of setting a geographical range for the map data based on preset transfer conditions when transferring the map data, and then transferring the map data from the portable recording medium to the recording medium based on the set geographical range.

According to the present invention, when transferring the map data, a geographical range for the map data is set based on preset transfer conditions, and the map data is transferred from the portable recording medium to the recording medium based on the set geographical range.

Accordingly, if the map data having a road which may be set as route by searching again and reset the route is transferred in advance based on the transfer conditions, it is possible to accurately perform route guidance and display the current position based on pre-stored map data without transferring the map data used the route guidance again even when the route is searched again and reset due to ever-changing road conditions such as traffic jams or traffic accidents, or the user's sudden changes or modifications in stopping points along the route.

As a result, in the invention, it is possible to accurately perform the route guidance and displaying the current located when resetting the route even when it is not possible to read the portable recording medium on which the map data is pre-recorded, and thus it is possible to do away with troublesome user operation such as remounting the portable recording medium on which the map data are stored when the map data on the portable recording medium cannot be read.

The above object of present invention can be achieved by a recorded medium of the present invention wherein a the navigation map data acquisition program is recorded so as to be read by a computer, the computer included in a navigation apparatus for navigating a mobile body. The navigation map data acquisition program causes the computer to function as: an acquisition device for acquiring the current position of a moving body; a registration device for registering the destination to which the moving body is to reach; a reading device for reading the map data recorded on a mounted portable recording medium; a recording device for transferring the map data, which has a preset geographical range that includes the road set as the route, based on the current position of the moving body and the set route from the portable recording medium to a memory device, and recording the transferred map data on the memory device as the map data for using route guidance for the moving body based on the set route.

According to the present invention, the map data which has a preset geographical range that includes the road set as the route is transferred from the portable recording medium to the memory device based on the current position of the moving body and the set route

Accordingly, in the present invention, because it is possible to store the map data to be used in route guidance after the route is set in a memory, even when it is impossible to read the map data from the portable recording medium on which the map data is stored such as when the portable recording medium is replaced with another recording medium, neither route guidance or the display of the current position of the automobile is stopped, and it is possible to accurately perform route guidance and display the current position.

Furthermore, in the present invention, it is possible to accurately perform route guidance and display the current position by simply transferring the map data to be used in route guidance to a memory even when it is impossible to read the map data as described above. Therefore, it is possible to accurately perform route guidance and display the current position using an inexpensive and compact navigation apparatus.

In one aspect of the present invention, the navigation map data acquisition program is further provided with; the recording device for setting a geographical range for the map data based on preset transfer conditions when transferring the map data, and then transferring the map data from the portable recording medium to the recording medium based on the set geographical range.

According to the present invention, when transferring the map data, a geographical range for the map data is set based on preset transfer conditions, and the map data is transferred from the portable recording medium to the recording medium based on the set geographical range.

Accordingly, if the map data having a road which may be set as route by searching again and reset the route is transferred in advance based on the transfer conditions, it is possible to accurately perform route guidance and display the current position based on pre-stored map data without transferring the map data used the route guidance again even when the route is searched again and reset due to ever-changing road conditions such as traffic jams or traffic accidents, or the user's sudden changes or modifications in stopping points along the route.

As a result, in the invention, it is possible to accurately perform the route guidance and displaying the current located when resetting the route even when it is not possible to read the portable recording medium on which the map data is pre-recorded, and thus it is possible to do away with troublesome user operation such as remounting the portable recording medium on which the map data are stored when the map data on the portable recording medium cannot be read.

### BRIEF DESCRIPTION OF THE DRAWINGS

Fig. 1 is a block diagram showing the construction of the navigation apparatus of this invention.
Fig. 2 is a drawing for explaining the concept of blocks as units of map data of an embodiment of the invention.
Fig. 3 is a drawing for explaining the transfer control of the system control unit of an embodiment of the invention.
Figs. 4A is a first drawing for explaining the judgment of the appropriateness of surrounding map block data to be transferred in an embodiment of the invention.
Figs. 4B is a second drawing for explaining the judgment of the appropriateness of surrounding map block data to be transferred in an embodiment of the invention.
Fig. 5A is a third drawing for explaining the judgment of the appropriateness of surrounding map block data to be transferred in an embodiment of the invention.
Fig. 5B is a fourth of drawing for explaining the judgment of the appropriateness of surrounding map block data to be transferred in an embodiment of the invention.
Fig. 5C is a fifth drawing for explaining the judgment of the appropriateness of surrounding map block data to be transferred in an embodiment of the invention.
Fig. 6 is a first drawing showing an example of route map block data that are transferred by the transfer operation of an embodiment of the invention.
Fig. 7 is a second drawing showing an example of route map block data that are transferred by the transfer operation of an embodiment of the invention.
Fig. 8 is a third drawing showing an example of route map block data that are transferred by the transfer operation of an embodiment of the invention.
Fig. 9 is a fourth drawing showing an example of route map block data that are transferred by the transfer operation of an embodiment of the invention.
Fig. 10 is a flowchart showing the transfer operation of an embodiment of the invention that transfers map data to a map-data-storage unit.

### DESCRIPTION OF THE PREFERRED EMBODIMENT

The preferred embodiment of the invention will be explained below based on the drawings.

In the embodiments explained below, the navigation apparatus of this invention is applied to a navigation apparatus installed in an automobile, and a DVD disc is used as the portable recording medium.

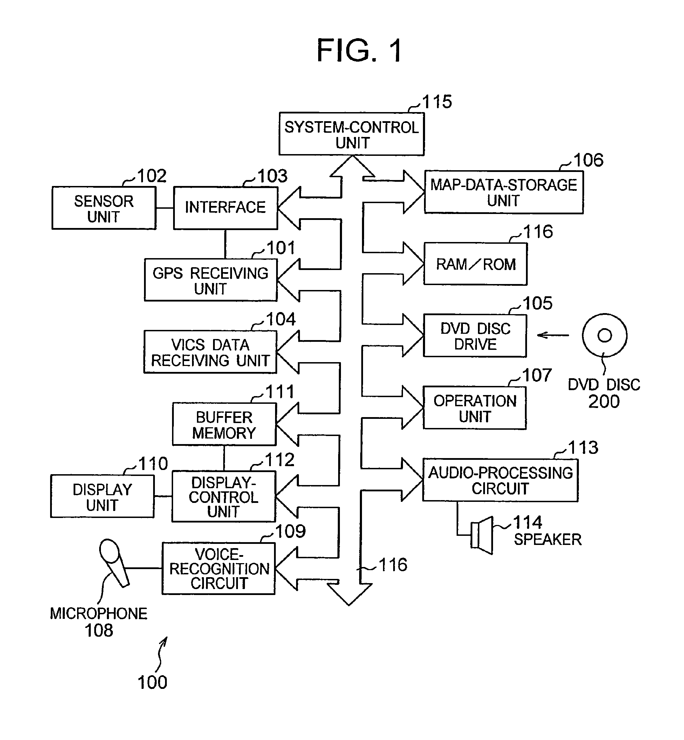

First, Fig. 1 will be used to explain the overall construction and operation of the navigation apparatus 100 of an embodiment of the invention.

Fig. 1 is a block diagram showing the construction of the navigation apparatus 100 of this invention.

The navigation apparatus 100 of this embodiment as shown in Fig. 1 comprises: a GPS receiving unit 101 that is connected to an antenna AT and receives GPS (Global Positioning System) data; a sensor unit 102 that detects movement data such as the speed of the automobile; an interface 103 that calculates the position of the automobile based on the GPS data and the movement data; a VICS (Vehicle Information Communication System) data receiving unit 104 that receives VICS data; a DVD disc drive 105 that reads data from a DVD disc 200 on which data such as map data are stored in advance; a map-data-storage unit 106 that acquires the map data from the DVD disc 200 and stores it when route guidance is being performed; an operation unit 107 that is used when the user performs settings and enters instructions to the system; a microphone 108 that picks up the user's voice; a voice-recognition circuit 109 that recognizes instructions to the system from the voice picked up by the microphone 108; a display unit 110 that displays the map data and the position of the automobile; a display-control unit 112 that uses a buffer memory 111 to control the display unit 110; an audio-processing circuit 113 that generates sound for the route guidance; a speaker 114; and a system-control unit 115 that controls the entire system; ROM/RAM 116. A bus 117 connects the system-control unit 115 to all of the units.

The GPS receiving unit 101 and sensor unit 102 of this embodiment are served as the acquisition device of this invention, and the DVD disc drive 105 of this embodiment is served as the reading device of this invention.

Moreover, the map-data-storage unit 106 of this embodiment is served as the memory device of the invention, and the operation unit 107 of this embodiment served as the registration device of this invention.

Furthermore, the system-control unit 115 of this embodiment is served registration device, setting device and transfer device of the invention.

The GPS receiving unit 101 receives navigation radio waves from a plurality of GPS satellites belonging to a global positioning system by way of the antenna AT, calculates the pseudo coordinate values for the current position of the moving body based on this received navigation radio waves and then outputs the result as GPS data to the interface 103.

The sensor unit 102 detects movement data such as velocity, acceleration and bearing angle of the automobile, and outputs that detected movement data to the interface 103.

More specifically, the sensor unit 102 detects the velocity of the automobile and converts the detected velocity to velocity data having the form of a pulse or voltage, and outputs that data to the interface 103.

Also, by comparing the acceleration due to movement of the automobile with acceleration due to gravity, the sensor unit 102 detects the upward or downward movement state of the automobile, then converts the acceleration data indicating the detected movement state to a pulse or voltage and outputs it to the interface 103.

Furthermore, the sensor unit 102 comprises a so-called gyro sensor and detects the bearing angle of the automobile, or in other words, detects the direction in which the automobile is moving, then converts that detected bearing angle to bearing data having the form of a pulse or voltage and outputs it to the interface 103.

The interface 103 performs interface processing between the sensor unit 102 and GPS receiving unit 101 and the system-control unit 115, calculates the position of the automobile based on the input GPS data and movement data, and outputs that calculated position of the automobile to the system-control unit 115 as automobile-position data.

This automobile-position data is compared with the map data in the system-control unit 115 when a map matching process or the like is executed.

The VICS data-receiving unit 104 acquires the VICS data by receiving radio waves such as from FM multiplex broadcast waves, and outputs the acquired VICS data to the system-control unit 115.

VICS is a road condition information communication system and the VICS data is the road conditions information such as traffic jams, traffic accidents, traffic restrictions, and the like.

The DVD disc drive 105 comprises a storage unit in which the DVD disc 200 can be mounted or removed, and a read-only drive that reproduces the data on the DVD disc 200 such as a road map, outputs the read map data to the system-control unit 115 and map-data-storage unit 106.

Incidentally, a read-only drive reads map data such as a road map and other information required for guidance (hereafter referred to as map data others.) that are pre-recorded on the DVD disc.

In addition to data that includes the road-shape data necessary for the navigation operation, this map data others includes other related data such as related building data or place name data that correspond to the road-shape data. Furthermore, the entire map is divided into a plurality of blocks and the map data corresponding to each block is managed as block map data.

Also, the DVD disc drive 105 reproduces a DVD disc 200 on which contents data and other data such as sound and video (hereafter called contents data) are recorded, and the reproduced and read contents data are output to the audio-processing circuit 113 or display-control unit 112 by way of the system-control unit 115.

The map-data-storage unit 106 comprises a non-volatile memory, and when the route from the current position of the automobile to the destination is set, it stores the block map data acquired from the DVD disc 200 based on the current position of the automobile, the set route to the destination and other transfer conditions that will be described later, before the route-guidance of the automobile begins.

Also, while route guidance is being performed, this map-data-storage unit 106 outputs the stored map data to the display unit 110 and audio-processing circuit 113 according to instructions from the system-control unit 115.

The operation of acquiring block map data stored in the map-data-storage unit 106 (transfer operation) will be explained in detail later.

The operation unit 107 comprises a device having a plurality of keys such as various confirmation buttons and number keys such as a remote-control apparatus. Especially, the operation unit 107 is used for entering instructions from the operator such as instructions for displaying the automobile-movement information, input of the destination that the automobile is to reach, and other settings.

The audio-processing circuit 109 receives the voice instructions which are generated by the user and are picked up by the microphone 108, and the voice-recognition circuit 109 analyzes the voice input as an operation command of the navigation apparatus and outputs the analysis results to the system-control unit 115.

The display unit 110 comprises a CRT or liquid-crystal-display elements, and displays map data in various forms according to control by the display-control unit 112. Also, the display unit 110 displays the various conditions required for route guidance, such as the position of the automobile, and in addition to map data. Incidentally, the display unit 110 displays other contents information.

The display-control unit 112 receives the map data and contents data by way of the system-control unit 115. The display-control unit 112 generates the display data that are to be displayed on the display unit 110 according to instructions from the system-control unit 115, temporarily stores that display data in a buffer memory 111. Furthermore, the display-control unit 112 reads that display data from the buffer memory 111, and outputs it to the display unit 110 at specified timing.

The audio-processing circuit 113 generates an audio signal based on an instruction from the system-control unit 115, and amplifies that generated audio signal by way of the speaker 114. For example, the audio-processing circuit 113 outputs information related to route guidance such as the direction the automobile should move at the next intersection, direct warnings to the operator such as traffic-jam information or detour information (hereafter called route-guidance information), as an audio signal to the speaker 114.

The system-control unit 115 mainly comprises a central-processing unit (CPU), as well as various input ports such as a GPS receiving port, key-input port and display-unit-control port, and it performs overall control of the functions for the navigation process.

This system-control unit 115 controls the operation of the entire navigation apparatus. This system-control unit 115 reads the control program stored on the ROM/RAM 116 and executes various processes, and temporarily stores data in the ROM/RAM 116 during processing.

For example, while performing route guidance, this system-control unit 115 performs correction processing such as map matching based on the automobile-position data that are output from the interface 103 and map data. This system-control unit 115 makes the display unit 110 display route-guidance information showing the surrounding area including the current position of the automobile by controlling the display unit 110, and the audio-processing circuit 113 output the guidance information as audio by controlling the audio-processing circuit 113.

Also, when the user enters the destination and sets the route, the system-control unit 115 performs control such that the map data others recorded on the DVD disc 200 mounted in the DVD disc drive is transferred to the map-data-storage unit 106 based on the set route and set transfer conditions before route guidance begins. Therefore, during route guidance, it is possible to perform route guidance even though the DVD disc 200 having the map data others may be removed.

The transfer control performed by the system-control unit 115 of this embodiment will be explained in detail later.

Furthermore, the system-control unit 115, together with performing route guidance, manages the store map data others that is used for route guidance. During route guidance, the system-control unit 115 acquires the map data others, which is displayed by display 110, from the map-data-storage unit 106 and outputs it to the display unit 110 by way of the display-control unit 112.

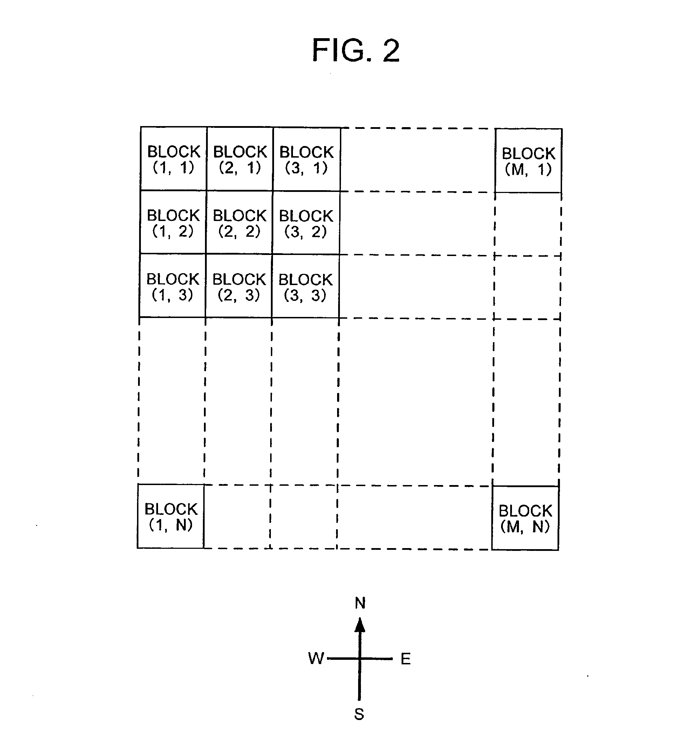

Next, Fig. 2 is used to explain the map data others that are recorded on the DVD disc 200 and that are stored in the map-data-storage unit 106.

Fig. 2 is a drawing that explains the concept of the block as the unit used for dividing up the recorded and stored map data.

As described above, map data, which includes the road-shape data necessary for the navigation operation, as well as various related data such as related building data, place-name data and the like corresponding to the road-shape data, is recorded on the DVD disc 200.

In this embodiment, the entire map is divided into mesh-shaped blocks as unit areas, and the map data corresponding to each block is recorded as block map data.

As shown in Fig. 2, the entire area of the map is divided into a plurality of meshed-shaped blocks with M number of blocks in the East-West direction and N number of blocks in the North-South direction, and the block map data corresponding to each block is managed

For example, in Fig. 2, the block (i, j) is defined as the ith block from the West and the jth block from the North, and the all of the map data is configured with identical shaped blocks from block (1, 1) in the Northwest corner to block (M, N) in the Southeast comer.

In this embodiment, the entire map is explained as a rectangular-shaped area with each of the blocks also being rectangular shaped. However, in actuality, a map having a complex shape may be used, and so the shapes of the blocks are not limited to being identical, and the scale of each block map data is also not limited to being identical.

Also, the blocks each have the identical rectangular shape in order to simplify the explanation of this embodiment. However, it is also possible to apply the invention to more complicated block shapes.

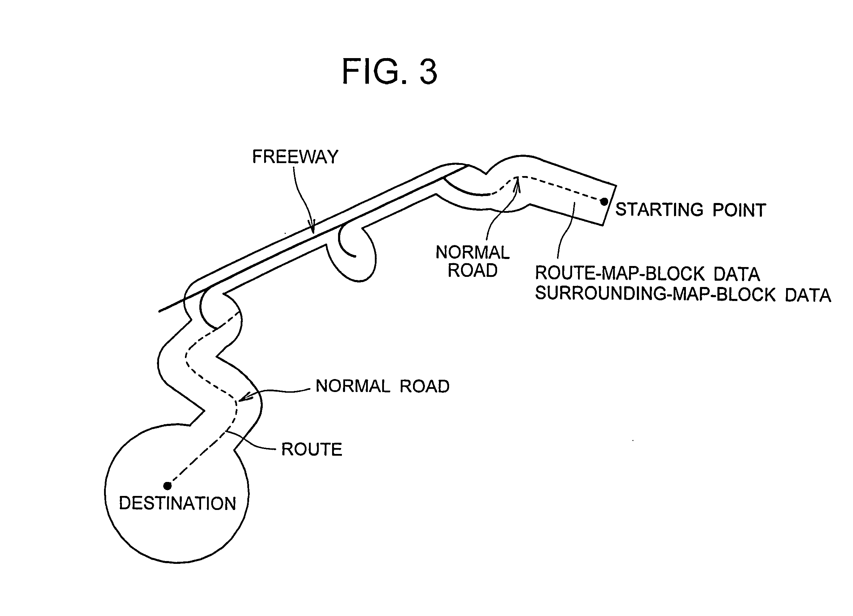

Next, Fig. 3 to Fig. 6 will be used to explain the transfer control by the system-control unit 115 of this embodiment.

First, Fig. 3 will be used to explain the theory of the transfer control by the system-control unit 115 of this embodiment.

Fig. 3 is a drawing for explaining the transfer control by the system-control unit 115 of this embodiment.

When the user enters a destination and sets the route, the system-control unit 115 performs control such that the map data recorded on the DVD disc 200 that is mounted in the DVD disc drive 105 is transferred to the map-data-storage unit 106 based on the transfer conditions such as the set route, current position of the automobile and characteristics of the set route, before route guidance begins.

By transferring map data in this way before route guidance begins, the navigation apparatus 100 of this embodiment is able to perform route guidance even though the DVD disc 200 having the map data may be removed during route guidance.

More specifically, the system-control unit 115 of this embodiment transfers the block map data having road set as the route (hereafter referred to as route-map-block data) and the block map data of the area surrounding the route-map-block data (hereafter called surrounding-map-block data) to the map-data-storage unit 106. In the case where the system-control unit 115 transfers the surrounding-map-block data to the map-data-storage unit 106, the system-control unit 115 determines the appropriateness of the transferred the surrounding-map-block data according to the characteristics of the set route, or in other words, sets a geographical range, and transfers the set surrounding-map-block data to the map-data-storage unit 106.

Determining the appropriateness of the surrounding-map-block data to be transferred in this embodiment will be explained in detail later.

Normally, if once the route that the automobile is to travel to the destination has been set, it is possible for the automobile to reach the destination by following that set route. Therefore, before the automobile starts moving toward the destination, it is possible to perform the route guidance to travel to the destination by transferring the map data related to the route, or in other words, by transferring just the block map data that has the road set as the route

However, often the route must be changed due to ever-changing road conditions such as traffic jams or traffic accidents, or when the user suddenly changes or adds places to stop along the way. Therefore, in this case, the route must often be searched again and reset.

On the other hand, in the case of transferring the block map data with the assumption that route guidance will be performed according to just the route set before the automobile starts to move, the block map data not having the road set as the route is not transferred. Therefore, when the route is searched again and the newly road set as the route is contained in the block map data not having the road set as the original route by resetting the route, it is necessary to transfer that this block map data from the DVD disc 200 to the map-data-storage 106.

Also, in this case, when the DVD disc 200 on which the map data not having the road set as the original route is pre-recorded is not mounted in the DVD disc drive 105, the user must perform the troublesome operation of inserting the DVD disc 200 on which this block map data is recorded, or replace another optical disc with it.

Furthermore, if the system-control unit 115 performs the transfer operation for transferring the block map data whenever the route is reset, the amount of processing to be performed by the system-control unit 115 becomes excessively large. Additionally, it is not able to start guidance quickly. On the other hand, when the route is searched again and reset, the destination and the current position of the automobile do not change so the route is not greatly changed.

Therefore, in this embodiment, the block map data, which is foreseen that possibly containing the road is set as the route when the route is searched again and reset, is transferred in addition to the block map data containing the set route.

For example, as shown in Fig. 3, when the route from the starting point to the destination is set, the route-map-block data and the surrounding-map-block data are transferred to the map-data-storage unit 106 based on that set route.

Fig. 3 shows a set route that includes normal roads, a freeway and automobile-only road (hereafter, called a freeway) and the geographical range of the route-map-block data and the surrounding-map-block data that are transferred based on that route. Furthermore, the Fig. 3 shows that more surrounding-map-block data near the entrances and exits of the freeway in the route and near the destination are transferred than that near other areas along the route.

Also, in this embodiment, whenever the route is set, the block map data are transferred, however, since the current position of the automobile is displayed when the system is started, and the block-map data to be transferred is set, normally map data for the entire map that covers all of the block map data and that has a rougher scale than the block map data is stored in the ROM/RAM 116. When the entire system is activated, the system-control unit 115 performs a data check of this map data for the entire map in order to prevent problems in transferring data.

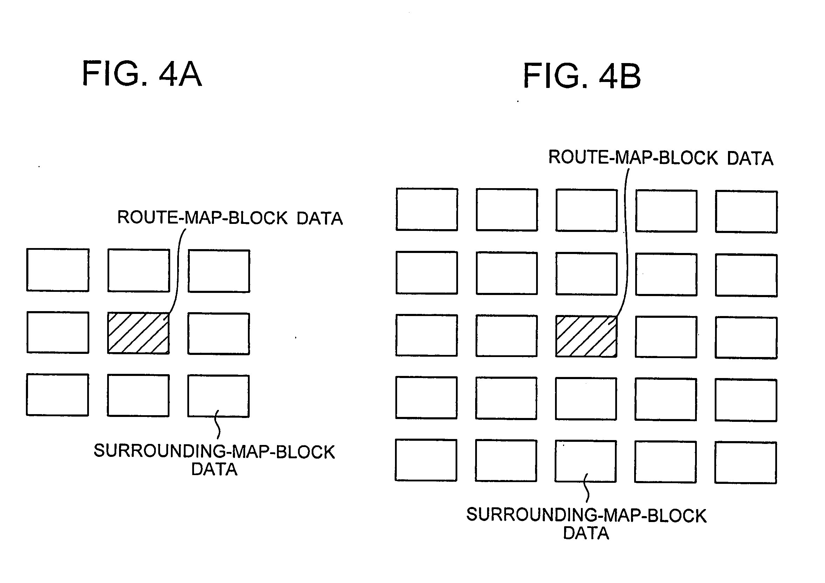

Next, Fig. 4 to Fig. 9 will be used to explain the determination of the appropriateness of the surrounding-map-block data that are transferred in this embodiment.

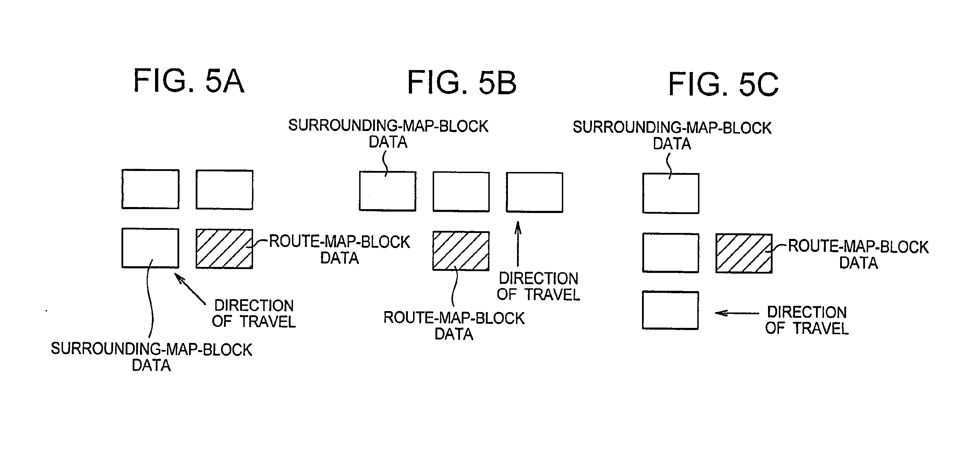

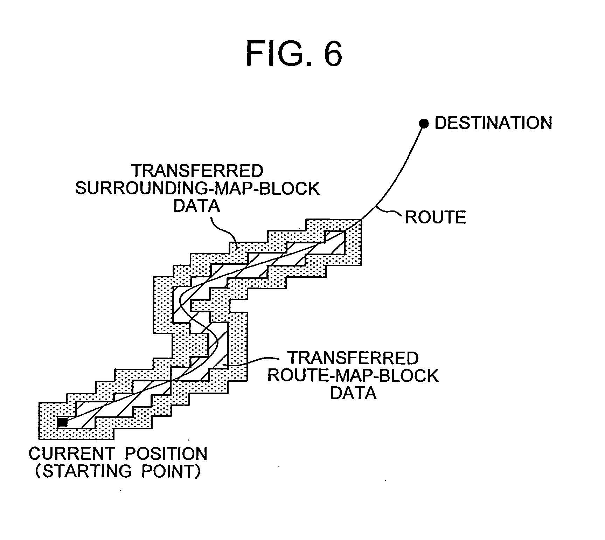

Fig. 4 and Fig. 5 are drawing for explaining the determination of the appropriateness of the surrounding-map-block data that is transferred in this embodiment, and Fig. 6 to Fig. 9 are examples of route-map-block data that are transferred by the transfer operation of this embodiment.

In this embodiment, as shown in Fig. 4A, the system-control unit 115, as a general rule, transfers the nine blocks of block map data, which surround the route-map-block data that has the road set as the route, as surrounding-map-block data. Furthermore, the system-control unit 115 determines whether to increase or decrease the amount of surrounding-map-block data that surrounds the route-map-block data based on the transfer conditions.

For example, in the case where the route-map-block data has the road, which is a freeway, set as the route and the entrances and exits of that freeway, in the case where the route-map-block data contains the destination or stops along the way, in the case where the route-map-block data having road set as route is in a city, or in the case where the route-map-block data contains the position of the automobile at the time when the route was set, there is a high probability that the route will be searched again and changed, and the frequency that the route is changed to a road surrounding the set route is high. Therefore, the system-control unit 115 increases the amount of the surrounding-map-block data to be transferred based on the route-map-block data.

More especially, in this embodiment, in the case where the number of the surrounding-map-block data is increased, as shown in Fig. 4B, the system-control unit 115 increases the number of blocks of the surrounding-map-block data around the route-map-block data from normal 9 to 25.

On the other hand, in the case where the route-map-block data has the road, which is a freeway, set as the route and do not has the entrances and exits of that freeway, or in the case where the route-map-block data having the normal road set as the route is outside of a city, it is very rare that the actual route is changed even when the route is searched again changed. Therefore, the system-control unit 115 decreases the amount of the surrounding-map-block data to be transferred based on the route-map-block data.

More specifically, in this embodiment, in the case where the surrounding-map block data is decreased, as shown in Figs. 5A, 5B and 5C, the system-control unit 115 decreases the normal number of blocks of surrounding-map-block data around the route-map-block data from normal 9 to just 3 blocks of surrounding-map-block data in the direction that the automobile travels.

Incidentally, in this case, the surrounding-map-block data corresponding to the direction that the automobile travels along the route agrees with the route-map-block data when it judges on the whole block map data that is transferred. Therefore, so in actuality, the surrounding-map-block data is 2 blocks.

Moreover, in this embodiment, the system-control unit 115 determines the amount of the block map data and the appropriateness of the surrounding-map-block data to be transferred based on the geographical range data that is pre-recorded in the block map data as the adjacent block map data that is always transferred when transferring the block map data.

More specifically, in the case where there is a large amount of data in one block of block map data, it is assumed that there are a lot of roads in that one block of block map data. Therefore, there are a lot of roads that could become the route when the route to the destination is searched again due to road conditions as described above. As a result, it is possible to sufficiently search and reset the route even there is a small amount of the transferred block map data. Therefore, in this case, the amount of surrounding-map-block data is reduced.

Also, when transferring the block map data the system-control unit 115 reads control data belonging to the transferred block map data, and as described above, sets the block map data to be transferred based on the control data regardless of the appropriateness of the block map data to be transferred.

For example, in the case where a road that could become the route exist a plurality of blocks of the block map data due to geographical shape problems such as the shape of the road, in order to prevent the block map data that are supposed to be transferred from not being transferred as described above, the block map data has an indication to forcibly transfer other block map data when transferring any one of a plurality of blocks of block map data, or an indication to stop transferring surrounding block map data when it is determined that there is little possibility that the route will be reset due to past traveling conditions of the automobile, or when near the operators home is placed

Furthermore, in the case where the route-map-block data that is used for route guidance is not stored in the map-data-storage unit 106 when performing route guidance, the system-control unit 115 of this embodiment transfers the block map data used for route guidance from the DVD disc 200 to the map-data-storage unit 106. More specially, the route-map-block data that is used for route guidance is not stored in the map-data-storage unit 106 in the case where the route from the current position to the destination is a long distance and the amount of the block map data for the entire set route exceeds data capacity that is normally stored in the map-data-storage unit 106 and cannot be stored in the map-data-storage unit 106, in the case where it is possible that a plurality of routes could be set and it is almost a certainty that the route will be searched again and the block map data for all of the set routes are not stored in the map-data-storage unit 106, or a case where it is not possible to transfer all of the map data necessary for route guidance by reproducing contents data on the DVD disc 200 after route guidance has started.

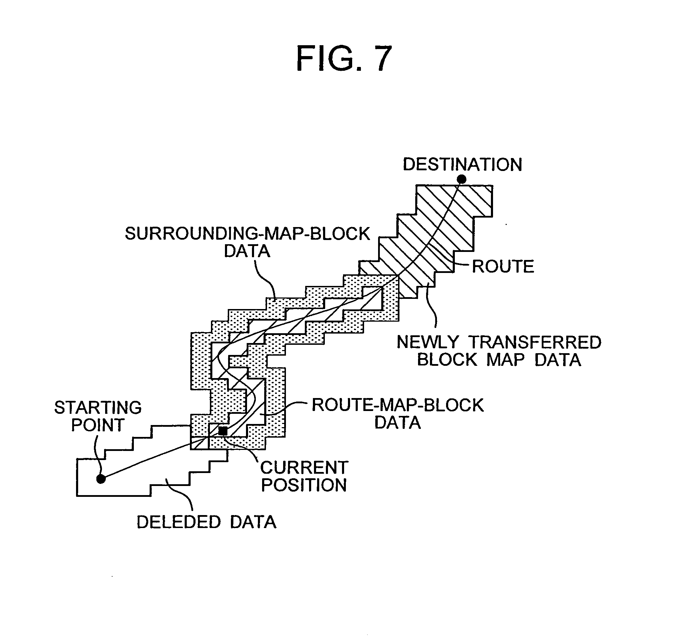

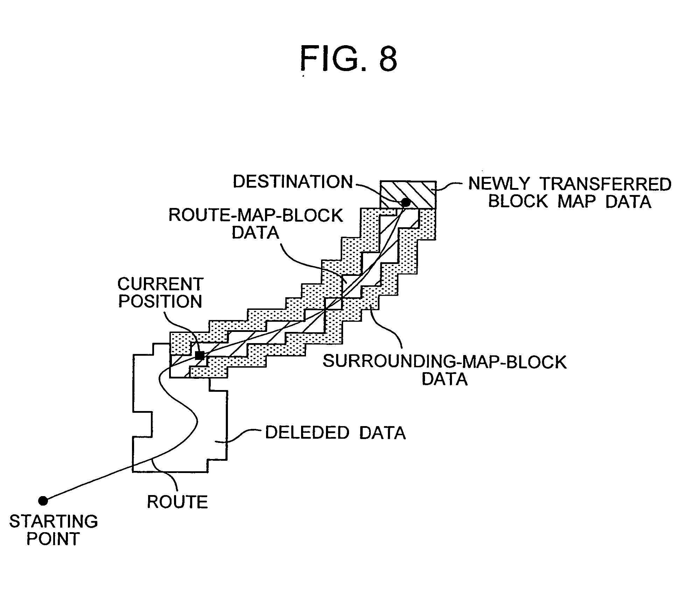

For example, in the case where all of the block map data for the entire route is not stored in the map-data-storage unit 106 as shown in Fig. 6, the system-control unit 115, as shown in Fig. 7, transfers the route-map-block data and the surrounding-map-block data (hereafter called route-map-block data others.) when the automobile begins traveling along the set route and travels for a pre-estimated amount of time. Then, as shown in Fig. 8, the system-control unit 115 repeats this operation until all of the route-map-block data for the route up to the destination has been transferred. Incidentally, the system-control unit 115 transfers the route-map-block data others, which belongs to the preset geographical range, having the road set as route toward the destination that had not yet been transferred.

Incidentally, in this embodiment, when the system-control unit 115 transfers the block map data having the road set as the route up to the destination that have not yet been transferred as described above, the block map data that contains the part of the route that has already been passed is deleted.

Furthermore, in the case when the DVD disc 200 on which the block map data having the road set as the route is not mounted in the disc drive 105 by reproducing a disc on which the contents data is recorded after a pre-estimated amount of time has elapsed after the start of route guidance, the system-control unit 115 waits for the DVD disc 200 to be inserted and then transfers the block map data.

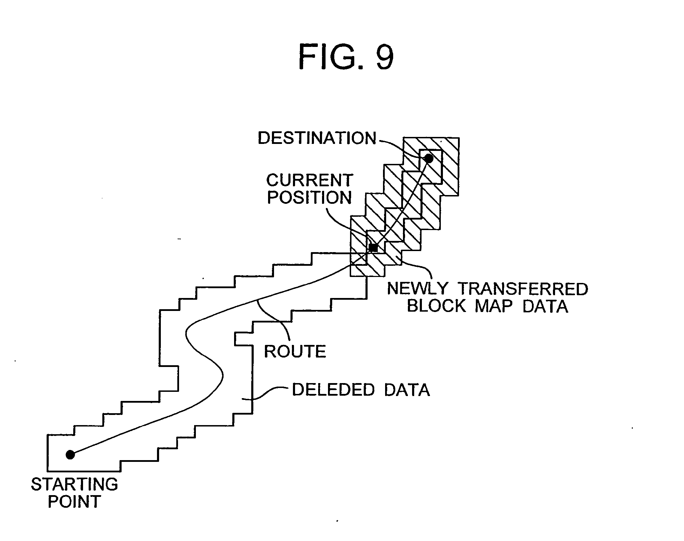

In this case, when the route-map-block data used for route guidance stored in the map-data-storage unit 106 runs out, for example, then as shown in Fig. 9, the system-control unit 115 waits for the DVD disc 200 to be inserted, and then as soon as the DVD disc 200 has been inserted it transfers the route-map-block data.

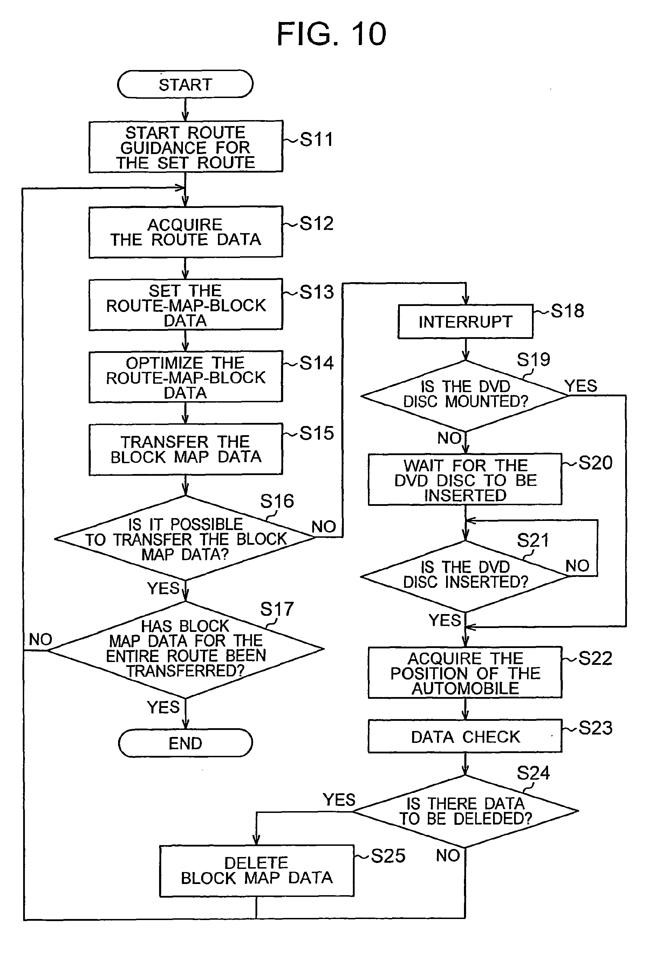

Next, Fig. 10 will be used to explain the operation of transferring the map data that is stored in the map-data-storage unit 106.

Fig. 10 is a flowchart showing the operation of transferring the map data of this embodiment to the map-data-storage unit 106.

In this transfer operation, it is assumed that the navigation apparatus 100 has already been started, and that the DVD disc 200 containing the block map data having the road corresponding to the set route is already mounted in the DVD disc drive 105.

First, after the user performs an operation and sets the route to the destination, the system-control unit 115 starts route guidance for the automobile based on the block map data having a place which indicates the starting position of the automobile (step S11).

Next, the system-control unit 115 acquires data of route for a preset range (hereafter referred to as route data) (step S12).

In the processing of this step S12, the system-control unit 115 determines the setting range for the route data based on at least the current position of the automobile, the block map data showing the position of the automobile, and the scale of previously acquired block map data.

For example, in this embodiment, the system-control unit 115 acquires the route data which is data of the road set as route belonging to the next route-map block data after the block map data currently is used for route guidance as the setting range.

Incidentally, this processing of the step S12 in this invention is not limited to the processing as described above, and it is also possible for the system-control unit 115 to acquire the route data, which is data of the road set as route belonging to the a few route-map-block data forward as the setting range.

Next, the system-control unit 115 sets the route-map-block data and the surrounding-map-block data as the route-map-block data based on the acquired route data (step S 13).

More specifically, as described above, the system-control unit 115 determines the block map data having the road set as the route as the route-map block data, and determines the surrounding-map-block data according to that the route-map-block data and the transfer conditions mentioned above.

Moreover, as a rule, the system-control unit 115 determines ID numbers (hereafter referred to as the block IDs) for the route-map-block data and the nine blocks of the surrounding-map-block data around the route-map-block data, and in the case of the route-map-block data having the aforementioned transfer conditions, the system-control unit 115 increases or decreases the number of the block map data surrounding the route-map-block data based on those transfer conditions. Then, the system-control unit 115 determines the block IDs for the route-map-block data and the surrounding-map-block data.

For example, the system-control unit 115 judges the type of road set as the route, whether or not there are exits or entrances along the freeway set as the route, and whether or not the destination or stops along the way are included in that route-map-block data. Furthermore, the system-control unit 115 judges the amount of data in the route-map-block data and its the control data, the amount of data that can be stored in the map-data-storage unit 106, and whether or not the transferred route-map-block data is around the starting point. Then, the system-control unit 115 determines the block IDs for the surrounding-map-block data based on these judgments.

The system-control unit 115 may also determine the surrounding-map-block data uniformly without judging the transfer conditions described above, and then determine block IDs for the block map data.

Next, the system-control unit 115 performs optimization of the set block IDs in the order corresponding to the order that the block map data are recorded on the DVD disc 200 (step S14).

More specifically, when a block of the block map data is set as both the route-map-block data and the surrounding-map-block data, or when a block of block map data is set as both the surrounding-map-block data of the route-map-block data and the surrounding-map-block data of another route-map-block data, the system-control unit 115 optimizes a block of the block map data such that it is not transferred twice or more.

Also, the system-control unit 115 rearranges the block IDs based on the order that the block map data is recorded on the DVD disc that contains the block map data to be transferred, and optimizes the process of acquiring the block map data.

In this process, after the order of the block IDs has been optimized, the block IDs are stored in ROM/RAM 116 according to that optimized order.

Next, the system-control unit 115 transfers the block map data from the DVD disc 200 to the map-data-storage unit 106 based on the optimized block IDs (step S15).

The system-control unit 115 then judges whether or not it is possible to still store block map data in the map-data-storage unit 106 (step S 16).

For example, as described above, in the case where there is not enough space in the map-data-storage unit 106 to store block map data such as in the case where the distance of the route from the current position to the destination is a long distance, or in case where it is not possible to transfer all of the set route-map-block data such as in the case where the DVD disc 200, on which the route-map-block data is recorded, is removed, the system-control unit 115 performs this judgment process.

More specifically, the system-control unit 115 judges whether or not all of the transferred block map data can be store into the map-data-storage unit 106, or whether or not the DVD disc 200, on which the route-map-block data is recorded, is removed by the user during the process of transferring the route-map-block data.

Next, when the system-control unit 115 judges that the block map data can still be stored in the map-data-storage unit 106, the system-control unit 115 then further judges whether or not all of the route-map-block data can be transferred (step S17), and when it is judges that all of the route-map-block data is transferred, the system-control unit 115 ends the transfer operation.

On the other hand, when the system-control unit 115 judges that all of the route-map-block data is not transferred, the process returns to step S12.

For example, in this embodiment, by judging whether or not the route-map-block data containing the destination has been transferred, the system-control unit 115 judges whether or not all of the block map data for the route is transferred.

After the system-control unit 115 judges that all of the route-map-block data is transferred and ends the transfer operation, the system-control unit 115 controls each unit to continue with performing route guidance based on the transferred route-map-block data.

On the other hand, when the system-control unit 115 judges that the block map data cannot all be stored in the map-data-storage unit 106, the system-control unit 115 controls each unit and performs route guidance based on the transferred route-map-block data and surrounding-map-block data, and temporarily stops the transfer operation of block map data (step S 18), and after the automobile exceeds a preset time, such as a the travel time mentioned above, the system-control unit 115 performs the following operation.

First, the system-control unit 115 judges whether or not the DVD disc 200, on which the block map data having the road set as the route is recorded, is mounted in the DVD disc drive 105 (step S19), and when it judges that the DVD disc 200 is not mounted, it prompts the user by way of the display unit 110 to insert the DVD disc 200, on which the block map data having the road set as the route is recorded, and waits for the DVD disc 200 to be inserted (step S20).

The system-control unit 115 performs route guidance based on the route-map-block data already stored in the map-data-storage unit 106, however when use of the route-map-block data and others stored in the map-data-storage unit 106 ends, the system-control unit 115 temporarily stops the route-guidance process and waits for more data.

Also, as will be described below, when the route-guidance process interrupts and the system-control unit 115 is waiting, by inserting the DVD disc 200 the transfer operation of transferring the route-map-block data starts again, and the system-control unit 115 restarts the route guidance after enough route-map-block data is stored to restart route guidance.

Next, the system-control unit 115 advances to the process of step S22 after the DVD disc 200 is inserted and the system-control unit 115 judges that the DVD disc 200 is inserted (step S21).

On the other and, stem-control unit 115 judges the DVD disc 200, on which the block map data having the road set as the route is recorded, is already mounted, the system-control unit 115 acquires the position of the automobile according to the movement data output from the GPS receiving unit 101 as described above (step S22).

Next, the system-control unit 115 checks the position of the automobile on the set route based on the acquired position of the automobile, and checks the data and amount of block map data stored in the map-data-storage unit 106 that is to be deleted (hereafter, this is simply referred to as a data check) (step S23).

The system-control unit 115 then judges whether or not there is block map data stored in the map-data-storage unit 106 that is to be deleted (step S24), and when the system-control unit 115 judges that there is no block map data to be deleted, it returns to step S 12.

On the other hand, when the system-control unit 115 judges that there is block map data to be deleted, the system-control unit 115 deletes that block map data (step S25), and the returns to step S12 and repeats the transfer process.

In step S16, when there is not enough space to transfer all of the route-map-block data to the map-data-storage unit 106, and the system-control unit 115 judges that there is not any block map data to be deleted, the system-control unit 115 advances to step S22 and acquires the position of the automobile according to the movement data output from the GPS receiving unit 101, and repeats the process until block map data that can be deleted is detected.

In this way, in the case where all of the route-map-block data having the road set as the route is not transferred during the operation of transferring route-map-block data, as shown in Figs. 6 to 8, the navigation apparatus 100 of this embodiment transfers the block map data having the road set as the route up to the destination that is not yet transferred after the automobile continues traveling along the set route and it travels for a pre-estimated amount of time.

Also, as shown in Fig. 9, in the case where the route-map-block data used for route guidance that is stored in the map-data-storage unit 106 runs out, the navigation apparatus 100 waits for the DVD disc to be inserted, and as soon as the DVD disc 200 is inserted, the navigation apparatus 100 is able to perform route guidance.

In the embodiment described above, the navigation apparatus 100 comprises: a GPS receiving unit 101 and sensor unit 102 that acquire the current position of the automobile; a system-control unit 115 that reads at least map data that is recorded on a mounted DVD disc 200, registers the destination that is to be reached by the automobile and sets a route to the destination based on the acquired current position of the automobile, the registered destination and map data; and a map-data-storage unit 106 that stores map data for performing route guidance for the automobile based on the set route; and wherein the system-control unit 115 transfers map data, which has a preset geographical range that includes the set route based on the current position of the automobile and the set route, from the DVD disc 200 to the map-data-storage unit 106.

With this construction, in this embodiment, the navigation apparatus having a player for reproducing a DVD disc 200, which is a portable recording medium containing map data, is capable of storing the map data used for route guidance in a map-data-storage unit 106 after the route is set. Therefore, the navigation apparatus 100 is capable of performing route guidance and displaying the current position of the automobile even when the DVD disc 200 on which the map data is recorded is replaced with another recording medium or is removed. Furthermore, the navigation apparatus 100 is inexpensive and compact.

Also, in this embodiment, when transferring the map data, the system-control unit 115 determines a geographical range for transferring the map data based on preset transfer conditions, and transfers map data from the DVD disc 200 to the map-data-storage unit 106 based on the set geographical range.

With this construction, in this embodiment, it is possible to the transfer map data in advance that has the roads, which may become the route by foreseeing in advance that the route to the destination to be reached by the automobile may be searched again and reset based on transfer conditions. Therefore, it is possible to prevent having to send new map data even when the route is searched again and reset due to ever-changing road conditions such as traffic jams and traffic accidents, or when the user suddenly changes or adds stops along the way. Furthermore, it possible to eliminate troublesome operations for the user in a case of resetting the route when the DVD disc 200, on which the map data is pre recorded, is not mounted in the disc drive 105.

In this embodiment, when searching and resetting the route to the destination, the system-control unit 115 as a rule performs the operation based on block map data that is already stored in the map-data-storage unit 106. However, in that case, when the adequacy of the reset route is low, such as when it is evident that traveling along the set route will take time, or when the distance to the destination is several times longer than a straight line to the destination, the transfer operation of this embodiment of transferring block map data is performed again from the beginning on the condition that the DVD disc 200, on which the block map data is recorded, is mounted in the DVD disc drive 105. Then, when setting the aforementioned block IDs, the block map data is transferred by comparing the block map data set the block IDs with the block map data already stored in the map-data-storage unit 106. Therefore, it is possible to perform the high speed of the transfer process of transferring block map data.

Also, in this embodiment, the described navigation apparatus 100 transfers the block map data from the DVD disc 200 to the map-data-storage unit 106. However, it is also possible to perform the transfer operation, as described above, for the navigation apparatus 100, which is performing the route guidance by using a data-recording medium on which the block map data is stored, by comprising a computer and a recording medium. In this case, the navigation apparatus 100 performs the transfer operation by reading a program of transfer operation from the recording medium and performing the program by computer.

Also, in this embodiment, in step S18 of the transfer operation when transferring block map data, the process is temporarily stopped and an operation after the intermediate process is performed after the automobile has traveled beyond a preset amount of time. However, it is also possible to constantly determine whether to restart the transfer operation based on the route-map-block data stored in the map-data-storage unit 106 and the block map data used for route guidance.

For example, in this embodiment, in a case of transferring route-map data that is not transferred, it is possible to determine whether the route-map-block data in the preset geographical range from the starting point, or in other words, the route-map data stored last in the map-data-storage unit 106 is used, whether the amount of the route-map-block data and the surrounding-map-block data already used for route guidance reaches the preset amount of data, or whether or not there is route-map-block data for the current position of the automobile.

## Claims

1. A navigation apparatus (100) **characterized in that** said apparatus comprises:
an acquisition device (101, 102) for acquiring the current position of a moving body;
a registration device (107, 115) that is used when registering the destination to which said moving body is to reach;
a reading device (105) in which a portable recording medium (200) on which map data is recorded is mounted and which reads at least the map data recorded on the portable recording medium (200);
a setting device (115) for setting a route to said destination based on the acquired current position, the registered destination and the recorded map data;
a memory device (106) for storing map data used route guidance for the moving body based on the set route; and
a transfer device (115) for transferring the map data, which has a preset geographical range that includes the road set as the route, based on the current position of the moving body and the set route from said portable recording medium (200) to the memory device (106).

2. The navigation apparatus (100) according to claim 1, wherein
said transfer device (115), when transferring the map data, sets a geographical range for the map data based on preset transfer conditions, and then transfers the map data from said portable recording medium (200) to said recording medium based on the set geographical range.

3. The navigation apparatus (100) according to claim 2, wherein
said transfer device (115) sets the geographical range of the map data with at least one of the amount of the map data and the route characteristics indicating the characteristics of the set route as the transfer condition.

4. The navigation apparatus (100) according to claim 3 wherein
said transfer device (115) sets the geographical range of the map data with the road characteristics, which includes at least one of the type of the set route, points along the way including preset conditions for the set route, and characteristics of district indicated by map data, as the transfer condition.

5. The navigation apparatus (100) according to any one of claims 1 to 4, in a case where the entire map is divided into a plurality of blocks, and the divided block map data is recorded on said portable recording medium (200), wherein
said transfer device (115) transfers the plurality of blocks of block map data recorded on said portable recording medium (200) to said memory device (106) in block units based on the geographical range of the map data.

6. A navigation map data acquisition method **characterized in that** said method comprises:
an acquisition step of acquiring the current position of a moving body;
a registration step of registering the destination to which said moving body is to reach;
a reading step of reading the map data recorded on a mounted portable recording medium (200); and
a recording step of transferring the map data, which has a preset geographical range that includes the road set as the route, based on the current position of the moving body and the set route from said portable recording medium (200) to a memory device (106), and recording the transferred map data on said memory device (106) as the map data for using route guidance for the moving body based on the set route.

7. The navigation map data acquisition method according to claim 6,
wherein
said recording step of setting a geographical range for the map data based on preset transfer conditions when transferring the map data, and then transferring the map data from said portable recording medium (200) to said recording medium based on the set geographical range.

8. A recording medium wherein a map data acquiring program is recorded so as to be read by a computer, the computer included in a navigation apparatus (100) for navigating a mobile body, **characterized in that** said program causes the computer to function as:
an acquisition device (101, 102) for acquiring the current position of a moving body;
a registration device (107, 115) for registering the destination to which said moving body is to reach;
a reading device (105) for reading the map data recorded on a mounted portable recording medium (200); and
a recording device (115) for transferring the map data, which has a preset geographical range that includes the road set as the route, based on the current position of the moving body and the set route from said portable recording medium (200) to a memory device (106), and recording the transferred map data on said memory device (106) as the map data for using route guidance for the moving body based on the set route.

9. The recording medium according to claim 8, wherein the program further causes the computer to function as
said recording device (115) for setting a geographical range for the map data based on preset transfer conditions when transferring the map data, and then transferring the map data from said portable recording medium (200) to said recording medium based on the set geographical range.
